# EUROPÄISCHE PATENTANMELDUNG

(11) **EP 2 233 726 A2**
(43) Veröffentlichungstag der Anmeldung: **29.09.2010**
(21) Anmeldenummer: 10002079.1
(22) Anmeldetag: 01.03.2010
(51) Int. Cl.: F02K 3/06

(54) **Nebenstromkanal eines Turbofantriebwerks**

(30) Priorität: 10.03.2009 DE 102009011924
(71) Anmelder: Rolls-Royce Deutschland Ltd & Co KG, 15827 Blankenfelde-Mahlow (DE)
(72) Erfinder: Clemen, Carsten, 15749 Mittenwalde (DE)
(74) Vertreter: Weber, Joachim

(57) **Zusammenfassung**

Der Querschnitt des Nebenstromkanals (1,1') eines Turbofantriebwerks ist im Bereich der den Leitschaufeln (7) stromab nachgeordneten Stützstreben (9) und/oder Bifurkationen (11) vergrößert, so dass die infolge der Aufstauwirkung der Einbauten verursachten und auf den Fan (6) zurückwirkenden Druckschwankungen verringert werden und der Fan mit höherem Wirkungsgrad und stabiler betrieben werden kann und letztlich die Verluste des Gesamtsystems und der Treibstoffverbrauch reduziert werden. Die Querschnittsvergrößerung erfolgt mit einem in einem begrenzten Bereich modifizierten Wandverlauf (3,3',4,4') durch eine in axialer und in Umfangsrichtung allmähliche, auf den Bereich um die Vorderkante der Stützstreben und/oder der Bifurkationen herum begrenzte Erweiterung (12) des Strömungsquerschnitts im Nebenstromkanal.

## Beschreibung

Die Erfindung betrifft die Ausbildung des Nebenstromkanals eines Turbofantriebwerks mit zwischen der Kanalinnenwand und Kanalaußenwand angeordneten Stützstreben und Bifurkationen.

Turbofantriebwerke weisen an der Lufteintrittsseite einen Bläser (engl. Fan) auf, hinter dem der Luftstrom in einen über Kompressoren der Brennkammer und der Turbine zugeführten inneren oder Kernluftstrom und in einen äußeren oder Nebenluftstrom aufgeteilt wird. Der Nebenluftstrom strömt in einem Nebenstromkanal, der von einer inneren Seitenwand und nach außen von der sich auf dieser abstützenden Triebwerksverkleidung begrenzt ist. Die gegenseitige Abstützung zwischen Nebenstromkanal und Kernstromkanal erfolgt durch dem Fan stromab nachgeordnete Leitschaufeln und gegebenenfalls - abhängig vom Triebwerkstyp - durch zusätzliche, stromab der Leitschaufeln ausgebildete Stützstreben. Darüber hinaus ist stromab der Leitschaufeln bzw. stromab der Stützstreben oder auch in der Ebene der Stützstreben mindestens eine Bifurkation angeordnet, durch die Leitungen zur Versorgung des Triebwerks und/oder des Flugzeugs geführt sind. Die Bifurkation dient zur aerodynamischen Verkleidung dieser Versorgungsleitungen, um durch Vibrationen bedingte mechanische Auswirkungen sowie Verwirbelungen und Druckverluste im Nebenstromkanal zu minimieren.

Die am Umfang zwischen der inneren Seitenwand und der Triebwerksverkleidung angeordneten Stützstreben und insbesondere die großvolumigen Bifurkationen bewirken einen Luftstau und erzeugen in Umfangsrichtung des Nebenstromkanals große statische Druckschwankungen, die auf den Fan zurückwirken und dessen Betriebsstabilität negativ beeinflussen. Die daher erforderliche stabilere Auslegung des Fans hat eine Erhöhung des Treibstoffbedarfs und letztlich eine Verringerung des Wirkungsgrades des Triebwerks zur Folge. Um diese Nachteile zu beseitigen, wurden bereits Maßnahmen zur unterschiedlichen Ausbildung der Leitschaufeln und/oder der Stützstreben oder zur aerodynamischen Gestaltung der für die Versorgungsleitungen vorgesehenen Verkleidung vorgeschlagen, die jedoch mit einem erheblichen Aufwand verbunden sind.

Der Erfindung liegt daher die Aufgabe zugrunde, ein Turbofantriebwerk mit im Nebenstromkanal angeordneten Einbauten so auszubilden, dass ein stabiler und effizienter Betrieb des Fans gewährleistet ist und letztlich die Verluste und der Treibstoffverbrauch verringert werden.

Erfindungsgemäß wird die Aufgabe mit einem im Bereich des Nebenstromkanals gemäß den Merkmalen des Patentanspruchs 1 ausgebildeten Turbofantriebwerk gelöst. Vorteilhafte Weiterbildungen der Erfindung sind Gegenstand der Unteransprüche.

Der Kern der Erfindung besteht darin, dass der Querschnitt des Nebenstromkanals eines Turbofantriebwerks im Bereich der den Leitschaufeln stromab nachgeordneten Stützstreben und/oder Bifurkationen vergrößert ist und somit die infolge der Aufstauwirkung der Einbauten verursachten und auf den Fan zurückwirkenden Druckschwankungen verringert werden, so dass der Fan mit höherem Wirkungsgrad und stabiler betrieben werden kann und letztlich die Verluste des Gesamtsystems und der Treibstoffverbrauch reduziert werden . Die Querschnittsvergrößerung erfolgt mit einem in einem begrenzten Bereich modifizierten Wandverlauf durch eine in axialer und in Umfangsrichtung allmähliche, auf den Bereich um die Vorderkante der Stützstreben und/oder der Bifurkationen herum begrenzte Erweiterung des Strömungsquerschnitts im Nebenstromkanal.

Die Erweiterung kann an der Kanalinnenwand und/oder der Kanalaußenwand vorgesehen sein und entsprechend der Dimensionierung der Bifurkationen und Stützstreben sowie der Anordnung und gegenseitigen Zuordnung im Nebenstromkanal variieren.

In weiterer Ausbildung der Erfindung ist die Erweiterung durch einen bestimmten sinuswellenförmigen Verlauf der Kanalinnenwand und/oder der Kanalaußenwand in axialer Richtung und in Umlaufrichtung bestimmt.

Gemäß einem weiteren Merkmal der Erfindung liegt die maximale Höhe der Erweiterung der Kanalinnen- und/oder - außenwand in Höhe der Vorderkante der Bifurkation(en) und/oder der Stützstreben.

In Ausgestaltung der Erfindung erstreckt sich die den Bifurkationen zugeordnete Erweiterung stromauf und stromab zu deren Vorderkante axial über eine Länge, die maximal dem Zweifachen des Abstandes zwischen der Hinterkante der Stützstreben bzw. Leitschaufeln und der Vorderkante der Bifurkation bzw. Stützstreben entspricht.

In weiterer Ausgestaltung der Erfindung weisen die Kanalinnenwand und/oder die Kanalaußenwand im Vorderkantenbereich der Stützstreben und/oder Bifurkationen einen sich über den gesamten Umfang erstreckenden cosinusförmigen Verlauf auf, wobei sich die Vorderkanten der Stützstreben und/oder Bifurkationen jeweils an der höchsten Stelle in einem die Erweiterung definierenden Wellental befinden.
Das größte Maß der Höhe der Erweiterung soll 50% der Gesamthöhe der Bifurkation oder der Stützstreben nicht überschreiten und vorzugsweise unter 20% liegen.

Ein Ausführungsbeispiel der Erfindung wird anhand der Zeichnung näher erläutert. Es zeigen:
- Fig. 1: eine stark schematisierte Darstellung eines Turbofantriebwerks mit zwei unterschiedlichen Varianten der Ausbildung des Nebenstromkanals;
- Fig. 2: eine als Abwicklung dargestellte Schnittansicht des in Fig. 1 im oberen Teil gezeigten Nebenstromkanals;
- Fig. 3: eine graphische Darstellung der Bemessung einer im Nebenstromkanal an einer Bifurkation vorgesehen Vertiefung in axialer Richtung;
- Fig. 4: eine Darstellung der Kontur der Kanalinnenund -außenwand bei zwei im Nebenstromkanal gegenüberliegend angeordneten Bifurkationen, und zwar in Höhe der Vorderkante der Bifurkation;
- Fig. 5 bis 7: Abwicklungen unterschiedlicher Wandkonturen in Umfangsrichtung des Nebenstromkanals bei zwischen zwei Bifurkationen angeordneten Stützstreben; und
- Fig. 8: eine Abwicklung der Kanalkontur in Umfangsrichtung bei unterschiedlich dimensionierten Bifurkationen.

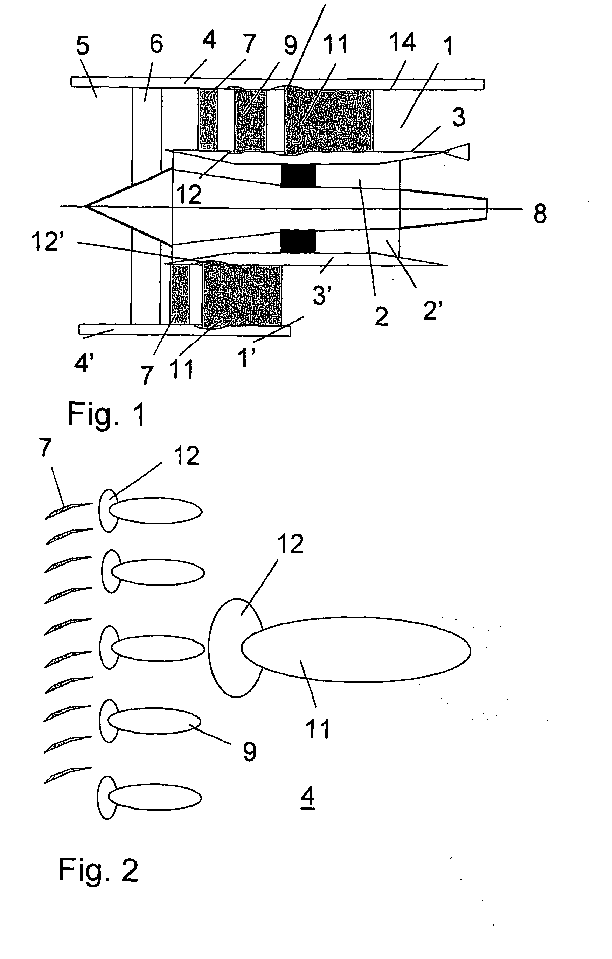

Fig. 1 zeigt in stark vereinfachter Darstellung ein Turbofantriebwerk mit zwei unterschiedlichen Ausführungsformen von Nebenstromkanälen 1, 1', die von einer den Kernstromkanal 2, 2' umschließenden Kanalinnenwand 3, 3' und der Triebwerksverkleidung, das heißt einer Kanalaußenwand 4, 4' begrenzt werden. An der Lufteintrittsseite 5 ist ein von der Kanalaußenwand 4, 4' (Triebwerksverkleidung) umgebener Fan 6 angeordnet. Der von dem Fan 6 erzeugte Luftstrom wird aufgeteilt und in den Nebenstromkanal sowie den Kernstromkanal geleitet. Im Nebenstromkanal 1, 1' sind - in regelmäßigem Abstand am Umfang verteilt - Leitschaufeln 7 angeordnet, die den Drall in der vom Fan 6 erzeugten Strömung beseitigen und die gleichzeitig eine Stützfunktion zwischen der Kanalaußenwand 4, 4' und der Kanalinnenwand 3, 3' übernehmen. Der in Fig. 1 oberhalb der Triebwerksachse 8 dargestellte Nebenstromkanal 1 weist stromab der Leitschaufeln 7 am Umfang regelmäßig verteilt angeordnete Stützstreben 9 zur gegenseitigen Abstützung zwischen der Kanalinnenwand 3 und der Kanalaußenwand 4 auf. Der unterhalb der Achse 8 gezeigte Nebenstromkanal 1' weist keine Stützstreben auf. Im Abstand von der Hinterkante 10 der Stützstreben 9 (Fig. 1 oben) bzw. der Leitschaufeln 7 ist eine Bifurkation 11 angeordnet, die zur Verkleidung von Versorgungsleitungen (nicht dargestellt) dient, aber auch eine Stützfunktion zwischen der Kanalaußenwand 4, 4' und der Kanalinnenwandwand 3, 3' übernehmen kann.

In der in Fig. 2 wiedergegebenen abgewickelten Darstellung einer Schnittansicht des in Fig. 1 oberen Nebenstromkanals 1 ist an der Innenseite der Kanalaußenwand 4 in einem zwischen der Hinterkante 10 einer Stützstrebe 9 und einem sich über die Vorderkante 13 der Bifurkation 11 hinaus erstreckenden Bereich eine flache, zu den Seitenrändern allmählich auslaufende Erweiterung 12 erkennbar, die durch eine modifizierte Wandausbildung erzeugt wird. Eine derartige Vertiefung in der Wand bzw. Erweiterung 12 des Strömungsquerschnitts befindet sich - wie Fig. 1 zeigt - auch auf der gegenüberliegenden Seite in der Kanalinnenwand 3 und gleichermaßen ist in der Kanalaußenwand 4' und der Kanalinnenwand 3' des Nebenstromkanals 1'eine Erweiterung 12' ausgebildet. Die Erweiterung 12, 12' kann auch nur an der Kanalinnenwand 3, 3' oder der Kanalaußenwand 4, 4' vorgesehen sein. Darüber hinaus ist es denkbar, dass die an der Kanalinnenwand und der Kanalaußenwand gegenüberliegenden Erweiterungen in Form, Tiefe und Größe unterschiedlich ausgebildet sind. Eine derartige allmähliche Erweiterung 12, 12', die gleichermaßen eine auf einen bestimmten Bereich begrenzte Vertiefung oder Einbeulung der Kanalinnen- oder -außenwand darstellt, ist hier auch im Bereich der Vorderkante der Stützstreben 9 vorgesehen.

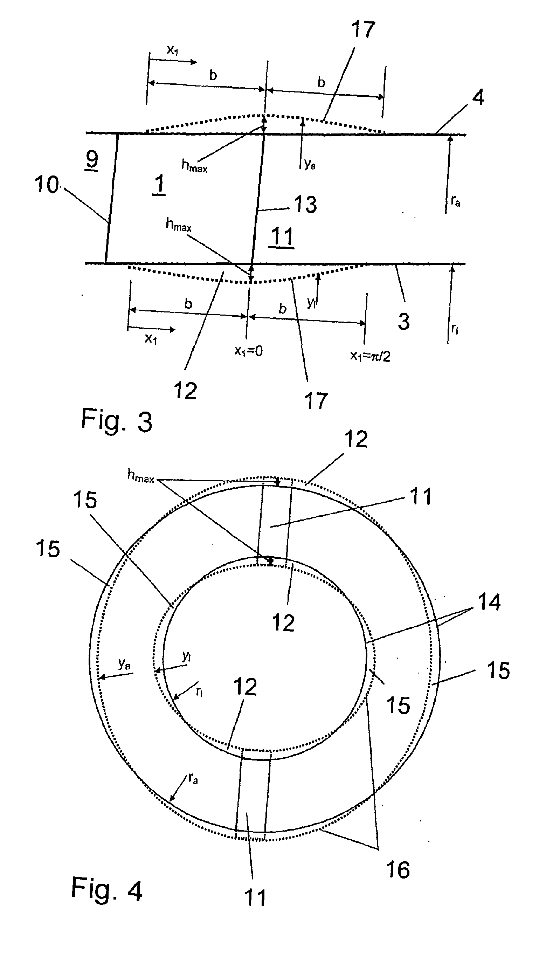

Fig. 3 ist eine graphische Darstellung der Bemessung einer in Höhe des vorderen Teils der Bifurkation 11 mit der modifizierten Kanalinnenwand 3, 3' sowie der modifizierten Kanalaußenwand 4, 4' ausgebildeten Erweiterung 12 in axialer Richtung. Die Länge der Vertiefung bzw. Erweiterung 12 kann idealerweise und maximal das Zweifache des Abstandes d zwischen der Hinterkante 10 einer Stützstrebe 9 und der Vorderkante 13 einer Bifurkation 11 betragen. In Abhängigkeit von der jeweiligen Anordnung oder Dimensionierung weiterer in Umfangsrichtung des Nebenstromkanals angeordneter Bifurkationen 11 kann die Längserstreckung der Erweiterung - wie Fig. 3 zeigt - auch um einen Wert 2s kleiner sein, das heißt 2·(d-s) = 2·b betragen. Die größte Höhe hₘₐₓ der von den Nebenstromkanalwänden ausgebildeten Erweiterung 12 befindet sich im Bereich der Vorderkante 13 der Bifurkation 11 und beträgt in der dargestellten Ausführungsform 20% der Höhe H der Bifurkation 11. Die Höhe hₘₐₓ an der Vorderkante der Bifurkation 11 sollte 50% der Höhe H nicht überschreiten, aber praktischerweise gleich oder kleiner als 20% von H sein. Der Verlauf yᵢ₋ₐₓ, yₐ₋ₐₓ der Kanalinnenwand 3, 3' bzw. der Kanalaußenwand 4, 4' in axialer Richtung im Bereich der Erweiterung 12 (punktierte Linie 16) des Nebenstromkanals 1, 1' ergibt sich über die Lauflänge x1 aus yᵢ₋ₐₓ=rᵢ(x1)+h(x1) und Yₐ₋ₐₓ=rₐ(x1)+h(x1), wobei ri und rₐ der Innen- bzw. Außenradius des Nebenstromkanals ist, x1 die Laufvariable in axialer Richtung ist und h(x1)=cos(x1) hₘₐₓ ist.

Fig. 4 zeigt eine Schnittansicht eines mit zwei Bifurkationen 11 ausgeführten Nebenstromkanals 1, 1', wobei der Schnitt in Höhe der Vorderkante 13 der Bifurkationen 11 gelegt ist. Die Kanalinnenwand 3, 3' und die Kanalaußenwand 4, 4' mit den im Bereich der Bifurkationen 11 vorgesehenen Erweiterungen 12 sind als punktierte Linien mit den Radien yᵢ₋ᵤₘ und yₐ₋ᵤₘ dargestellt, während die durchgezogenen Linien 14 die ursprüngliche Innenkontur des Nebenstromkanals 1, 1' mit den Radien rᵢ und rₐ darstellen. Der Verlauf von yᵢ₋ᵤₘ und yₐ₋ᵤₘ entlang dem Umfang ergibt sich aus yᵢ₋ᵤₘ=rᵢ+h(z1) bzw. yₐ₋ᵤₘ=ra+h(z1), wobei h(z1)=cos(z1)·hₘₐₓ ist und zl die Laufvariable in Umfangsrichtung ist. Wie Fig. 4 zeigt, steht den in Umfangsrichtung allmählich auslaufenden Erweiterungen 12 mit der an der Vorderkante der Bifurkation maximalen Höhe hₘₐₓ eine mittig zwischen den Bifurkationen 11 verlaufende allmähliche Erhöhung 15 der Kanalinnenwand 3 und der Kanalaußenwand 4 mit einer maximalen Höhe hₘₐₓ gegenüber, so dass sich in Umfangsrichtung der modifizierte - wellenförmige und punktiert dargestellte - Verlauf 16 der Kanalinnenwand 3, 3' und der Kanalaußenwand 4, 4' ergibt.

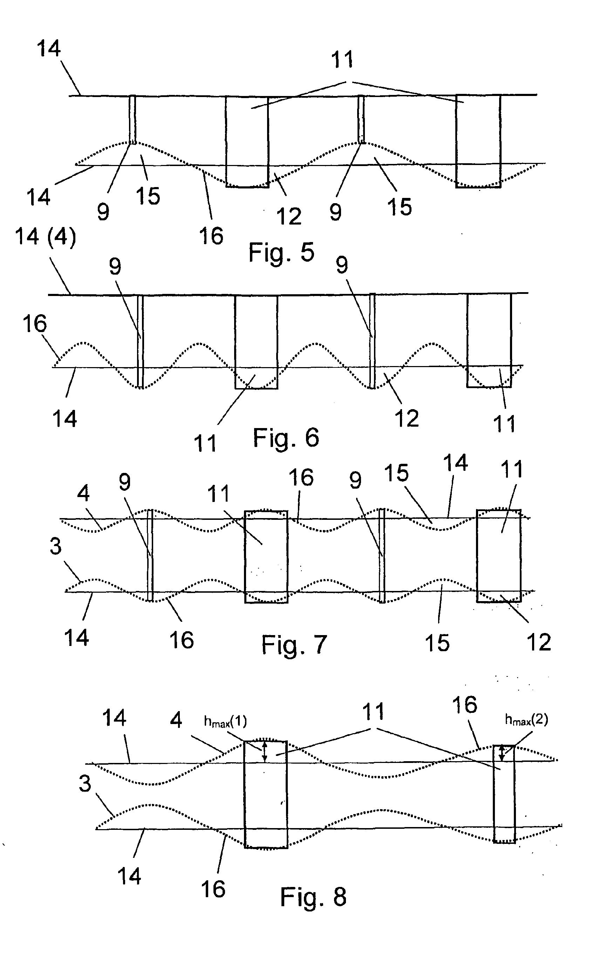

Die Figuren 5 bis 7 zeigen Abwicklungen des Verlaufs der Wandkontur der Kanalinnen- und -außenwand in einem Nebenstromkanal 1, 1', in dem zwischen den Bifurkationen 11 Stützstreben 9 angeordnet sind. Gemäß Fig 5 und 6 ist die Kanalaußenwand 4, 4' in der ursprünglichen, nicht modifierten Kontur ausgebildet, wobei nach Fig. 5 an den Bifurkationen eine Erweiterung 12 ausgebildet ist und die Stützstreben 9 zwischen einer Erhöhung 15 der Kanalinnenwand 3, 3' und der nicht modifizierten Kanalaußenwand 4, 4' angeordnet sind. Demgegenüber ist bei der Variante nach Fig. 6 sowohl an den Stützstreben als auch den Bifurkationen 11 eine Erweiterung 12 ausgebildet. Bei der Ausführungsform nach Fig. 7 haben die Kanalinnenwand 3 und die Kanalaußenwand 4 eine in Umfangsrichtung wellenförmige Kontur und den Stützstreben 9 und Bifurkationen 11 ist beidseitig eine Erweiterung 12 zugeordnet.

In Figur 8 ist noch eine weitere Variante der Ausbildung der Kanalkontur in Umfangsrichtung, und zwar bei unterschiedlich dimensionierten Bifurkationen 11, dargestellt. Danach ist die Höhe hₘₐₓ₍₂₎ der Vertiefung 12 bei einer kleineren Bifurkation und entsprechend geringerer Verdrängungswirkung auch kleiner als die Höhe hₘₐₓ₍₁₎ bei einer größeren Bifurkation. Gleichermaßen kann die Höhe hₘₐₓ an die jeweilige Größe der Stützstreben 9 und an den Abstand zwischen den Bifurkationen 11 oder den Stützstreben 9 angepasst werden.

### Bezugszeichenliste

- 1, 1': Nebenstromkanal
- 2, 2': Kernstromkanal
- 3, 3': Kanalinnenwand
- 4, 4': Kanalaußenwand
- 5: Lufteintrittsseite
- 6: Fan (Bläser)
- 7: Leitschaufeln
- 8: Triebwerksachse
- 9: Stützstreben
- 10: Hinterkante v. 9
- 11: Bifurkation
- 12: begrenzte Erweiterung des Strömungsquerschnitts, modifizierter Wandverlauf
- 13: Vorderkante der Bifurkation
- 14: normale Innenkontur v. 1, 1'
- 15: Erhöhung der Kanalinnen-/-außenwand
- hₘₐₓ: maximale Höhe der Erweiterung
- H: Höhe von 11
- D: Abstand zwischen 10 u. 13
- 2b: Länge der Erweiterung in axialer Richtung
- ri, rₐ: Innen- bzw. Außenradius v. 1, 1'
- yᵢ₋ᵤₘ, yₐ₋ᵤₘ: Verlauf von 12 in Umfangsrichtung
- yᵢ₋ₐₓ, yₐ₋ₐₓ: axialer Verlauf v. 12
- z1: Laufvariable in Umfangsrichtung
- x1: Laufvariable in axialer Richtung

## Patentansprüche

1. Nebenstromkanal eines Turbofantriebwerks mit zwischen der Kanalinnenwand (3, 3') und der Kanalaußenwand (4, 4') angeordneten Leitschaufeln (7) sowie Stützstreben (9) und/oder Bifurkationen (11), **gekennzeichnet durch** eine in axialer und in Umfangsrichtung allmähliche, auf den Bereich der Vorderkante der Stützstreben (9) und/oder der Bifurkationen (11) begrenzte Erweiterung (12) des Strömungsquerschnitts im Nebenstromkanal (1, 1') zur Verringerung von **durch** die Aufstauwirkung der Einbauten verursachten Druckschwankungen.

2. Nebenstromkanal nach Anspruch 1, **dadurch gekennzeichnet, dass** die Erweiterung (12) an der Kanalinnenwand und/oder der Kanalaußenwand vorgesehen ist.

3. Nebenstromkanal nach Anspruch 1, **dadurch gekennzeichnet, dass** die Erweiterung (12) durch einen bestimmten cosinuswellenförmigen Verlauf der Kanalinnenwand und/oder der Kanalaußenwand in axialer Richtung (yᵢ₋ₐₓ, yₐ₋ₐₓ) und in Umlaufrichtung (yᵢ₋ᵤₘ, yₐ₋ᵤₘ) bestimmt ist.

4. Nebenstromkanal nach Anspruch 3, **dadurch gekennzeichnet, dass** die maximale Höhe (hₘₐₓ) der Erweiterung (12) der Kanalinnen- und/oder -außenwand in Höhe der Vorderkante (13) der Bifurkation(en) (11) und der Stützstreben (9) liegt.

5. Nebenstromkanal nach Anspruch 3, **dadurch gekennzeichnet, dass** sich die den Bifurkationen zugeordnete Erweiterung (12) stromauf und stromab zu deren Vorderkante (13) axial über eine Länge (2b) erstreckt, die maximal dem Zweifachen des Abstandes (d) zwischen der Hinterkante (10) der Stützstreben (9) und der Vorderkante (13) der Bifurkation (11) entspricht.

6. Nebenstromkanal nach Anspruch 3, **dadurch gekennzeichnet, dass** die Kanalinnenwand und/oder die Kanalaußenwand im Vorderkantenbereich der Stützstreben (9) und/oder Bifurkationen (11) einen sich über den gesamten Umfang erstreckenden cosinusförmigen Verlauf aufweist, wobei sich die Vorderkanten der Stützstreben und/oder Bifurkationen jeweils an der höchsten Stelle (hₘₐₓ)in einem die Erweiterung (12) definierenden Wellental befinden.

7. Nebenstromkanal nach Anspruch 4, **dadurch gekennzeichnet, dass** das größte Maß der Höhe hmax der Erweiterung (12) 50% der Gesamthöhe (H) der Bifurkation (11) oder Stützstrebe (9) nicht überschreitet und vorzugsweise unter 20% liegt.
